# EUROPÄISCHE PATENTSCHRIFT

(11) **EP 1 629 223 B1**
(45) Veröffentlichungstag und Bekanntmachung des Hinweises auf die Patenterteilung: **01.08.2007**
(21) Anmeldenummer: 04724974.3
(22) Anmeldetag: 01.04.2004
(51) Int. Cl.: F16J 15/12

(54) **VERFAHREN ZUR HERSTELLUNG EINER FLACHDICHTUNG SOWIE FLACHDICHTUNG**
METHOD FOR THE PRODUCTION OF A FLAT SEAL, AND FLAT SEAL
PROCEDE DE PRODUCTION D'UN JOINT PLAT ET JOINT PLAT

(30) Priorität: 03.06.2003 DE 10324978
(43) Veröffentlichungstag der Anmeldung: 01.03.2006
(73) Patentinhaber: Federal-Mogul Sealing Systems GmbH, 57562 Herdorf (DE)
(72) Erfinder: KLINNER, Manfred, 53844 Troisdorf (DE)
(86) Internationale Anmeldenummer: PCT/DE2004/000678
(87) Internationale Veröffentlichungsnummer: WO 2004/111506

(56) Entgegenhaltungen:
- EP-A- 0 394 145
- EP-A- 1 388 691
- GB-A- 836 669
- US-A- 4 516 784
- US-A- 5 267 740
- US-B1- 6 371 489

## Beschreibung

Die Erfindung betrifft ein Verfahren zur Herstellung einer Zylinderkopfdichtung für eine Verbrennungskraftmaschine.

Wird eine Elastomerabdichtung für die Abdichtung von Medien, wie z.B. Wasser oder Öl, gefordert, wie es z. B. bei Zylinderkopfdichtungen für Verbrennungsmotoren der Fall ist, bedingt dies gewisse Voraussetzungen an die abzudichtenden Dichtflächen und je nach einem bestimmten Platzbedarf Hier bieten sich im wesentlichen zwei Möglichkeiten an:

Einzelabdichtungen von z. B. Öl-/Wassermedien innerhalb des Konzeptes. Diese Art der Abdichtung bedingt meistens mehr Platzbedarf, insbesondere in Verbindung mit der notwendigen brennraumnahen Gasabdichtung.

Die andere Art der Abdichtung wäre die umlaufende Abdichtung von zumindest einem Medium und die separate Abdichtung der übrigen Medien. Dies stößt mit derzeitigen Lösungen an Grenzen.

Allgemein bekannt ist das sogenannte "On Top Molding", das üblicherweise zur Abdichtung von Flüssigkeitsmedien eingesetzt wird. Hier ist eine umlaufende Abdichtung möglich. Diese Technik bedingt aber zur Begrenzung der Verformung der Elastomere Stopperlagen, um die Elastomere vor Zerstörung zu schützen. Diese Stopper werden durch Lagen gebildet, die auf dem Träger zusätzlich aufgebracht werden und im wesentlichen nur diese Funktion haben. Außerdem ist in Verbindung mit einer notwendigen Gasabdichtung im Brennraumbereich eines Motors eine zusätzliche Abdichtung mittels separater Einsätze oder zusätzlichen Lagen auf dem Trägerblech notwendig, d.h. das Trägerblech alleine kann ohne andere Designmittel für die Gasabdichtung so nicht genutzt werden.

Eine weitere Möglichkeit ist das sogenannte Edge-Molding, bei dem an die Kanten eines Trägerbleches ein Elastomerprofil zur Abdichtung angespritzt wird. Beim Edge-Molding beschränkt sich die Abdichtung zur Zeit auf die einzelnen Löcher. Eine umlaufende Abdichtung, kombiniert mit einer Halb- oder Vollsicke in bestimmten Lagen, ist zur Zeit nicht möglich. Das gewöhnliche Edge-Molding mit einer umlaufenden freien Elastomerlippe wäre gegenüber Relativbewegungen, wie sie beispielsweise bei in Verbrennungsmotoren eingesetzten Zylinderkopfdichtungen auftreten, zu schwach und würde unmittelbar zerstört werden.

Der DE-A 40 10 991 ist eine metallische Flachdichtung, insbesondere Zylinderkopfdichtung, zu entnehmen, mit in mindestens eine der Durchgangsöffnungen eingesetzten Einsatzdichtungsringen aus metallisch verstärktem Weichstoffmaterial und am Außenumfang radial vorstehenden Vorsprüngen. Die Vorsprünge sind von den metallischen Verstärkungsringen gebildet. In den Öffhungsrandbereich der Metallblechplatte sind korrespondierend zu den Vorsprüngen der Einsatzdichtringe die Vorsprünge aufnehmende Vertiefungen eingeprägt. Die Einsatzdichtungsringe sind nach dem Einsetzen in die Durchgangsöffnungen durch Verstemmen der Vertiefungsränder gegen Herausfallen gesichert.

Der US-A 5,267,740 ist eine Metall-Zylinderkopfdichtung mit integrierten Dichthilfen zu entnehmen. Zur Erzeugung von Medien führenden Durchgangslöchern werden selbige zum Teil mit ineinander laufenden Stanzbereichen versehen, wobei Verbindungsbereiche zwischen dem Trägermaterial und dem Hilfsmittel gegeben sind. Das Hilfsmittel wird dann mit einem seinen eigenen Randbereich sowie den Randbereich des umgebenden Trägermaterials übergreifenden Dichtprofil versehen.

Aus der US-A-4 516 784 ist eine Dichtscheibe bestehend aus zwei ineinanderliegenden Ringe zu entnehmen. Die beiden Scheiben sind über einem Elastomerkörper miteinander verbunden. Jede Scheibe weist seperate Duchgangsöffnungen auf, die nicht über Elstomerkörper abgedichtet sind.

Die GB 836 669 A offenbart eine Flachdichtung bei der das innere Blech über einen Elastomerkörper mit einem äußeren Blech verbunden ist. Die Dichtung ist nicht als Zylinderkopfdichtung konzipiert und weißt deshalb keine Brennraum-Durchgangsöffnung auf

Die EP A 1388691 offenbart eine Zylinderkopfdichtung bei der im Bereich von Medienlöchern mittels eines Einlegeteiles eine Abdichtung erfolgt. Das Einlegeteil weist keine Brennraum- Durchgangöffnung auf.

Der Erfindung liegt die Aufgabe zugrunde, ein Verfahren bereitzustellen, das den Forderungen eines zunehmend geringeren Platzbedarfs für die Abdichtung bei gleichzeitig geringen Kosten Rechnung trägt, wobei gleichzeitig auf einfache Weise eine Zylinderkopfdichtung für eine Verbrennungskraftmaschine, erzeugt werden soll.

Diese Aufgabe wird gelöst durch ein Verfahren zur Herstellung einer Zylinderkopfdichtung für eine Verbrennungskraftmaschine, gemäß der Merkmale des Patentanspruchs 1.

Vorteilhafte Weiterbildungen des erfindungsgemäßen Verfahrens sind den zugehörigen Unteransprüchen zu entnehmen.

Verfahrensgemäß werden aus ein und dem gleichen Trägermaterial die Metallteile vorteilhafterweise herausgestanzt, wobei das Elastomermaterial in den Spalt eingespritzt wird.

Einem weiteren Gedanken der Erfindung gemäß wird das Elastomermaterial an beiden Stirnseiten der Metallteile gleichzeitig angespritzt, so dass ein gekapseltes Profil gebildet wird. Dieses Elastomerprofil läuft dann zur Abdichtung eines Mediums komplett herum und umschließt vorteilhafterweise weitere andere abzudichtende Medien, die im inneren Bereich zusätzlich abgedichtet werden. Der Vorteil des Einsatzes von Metallteilen aus dem gleichen Trägermaterial ist darin begründet, dass unterschiedliche Blechdicken vermieden werden.

Das innere Metallteil kann zudem nach der bewährten Edge-Molding-Technik weitere kleine Löcher als Einzelabdichtung und damit mindestens ein zweites Medium abdichten.

Die Verformung des Elastomermaterials wird somit wieder durch die in einer Ebene vorgesehenen ineinanderliegenden Metallteile begrenzt.

Somit kann in einfacher Weise eine einlagige metallische Zylinderkopfdichtung, erzeugt werden. Durch den Einsatz von Dickblechendesign mit Edge-Molding kann gegenüber dem aufwendigeren "On Top Molding" eine relativ hohe Kosteneinsparung herbeigeführt werden. Infolge des gekapselten Edge-Moldings wird das Elastomermaterial gegenüber Relativbewegungen unempfindlich und in Position gehalten.

Gegenüber dem Stand der Technik wird ein geringerer Platzbedarf zwischen Gasabdichtung und z. B. Wasser- und Ölmedien mit der umlaufenden Abdichtung im Vergleich zur Einzelabdichtung realisiert.

Der Erfindungsgegenstand ist anhand eines Ausführungsbeispieles in der Zeichnung dargestellt und wird wie folgt beschrieben. Es zeigen:
- Figur 1: Draufsicht auf eine erfindungsgemäße Zylinderkopfdichtung;
- Figur 2: Angedeuteter Einbauzustand einer Zylinderkopfdichtung gemäß Figur 1.

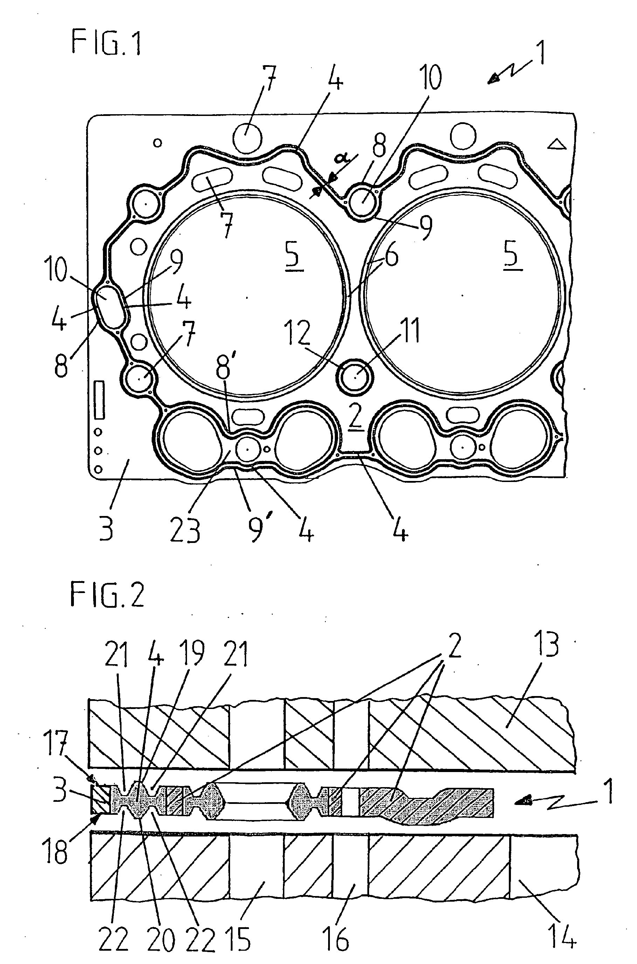

Figur 1 zeigt eine Zylinderkopfdichtung 1 für eine nicht weiter dargestellte Verbrennungskraftmaschine. Die Zylinderkopfdichtung 1 beinhaltet ein innenliegendes Metallteil 2 und ein außenliegendes Metallteil 3, die unter Bildung eines Spaltes a aus dem gleichen Trägermaterial herausgestanzt wurden. Die sich einstellenden Konturen der Metallteile 2, 3 sind an das jeweilige geometrische Profil der einzelnen Verbrennungskraftmaschine in entsprechender Weise anzupassen. In den als umlaufenden Kanal ausgebildeten Spalt a soll, in diesem Beispiel von beiden Stirnseiten ausgehend, Elastomermaterial 4 eingespritzt werden. Das Elastomermaterial 4 bildet somit einen umlaufenden Dichtbereich, wobei die Verformung des Elastomermaterials 4 durch die eine einlagige Zylinderkopfdichtung 1 bildenden Metallteile 2, 3 begrenzt wird. Das innere Metallteil 2 ist mit Brennraum-Durchgangsöffnungen 5 versehen, die gleichzeitig bei der Erzeugung der Metallteile 2, 3 mit ausgestanzt werden. An jede Brennraum-Durchgangsöffnung wird mindestens ein Wulst 6 angeprägt. In gleicher Weise werden aus dem inneren und äußeren Metallteil 2, 3 Löcher 7 ausgestanzt, die unterschiedlichsten Zwecken, beispielsweise auch der Montage der Zylinderkopfdichtung 1 dienen können. Des weiteren wird die Formgebung der Metallteile 2, 3 dergestalt ausgeführt, dass einander gegenüberliegende Ausnehmungen 8, 9 gebildet werden, die dann in gleichem Zuge von Elastomermaterial 4 unter Bildung von Mediendurchtritten 10 erzeugt werden. Weitere im inneren Metallteil 2 vorgesehene Mediendurchgangslöcher 11 werden durch das Edge-Molding-Verfahren mit Elastomermaterial 12 umgeben.

Figur 2 zeigt als Prinzipskizze einen angedeuteten Einbauzustand der Zylinderkopfdichtung 1 gemäß Figur 1. Erkennbar ist ein Zylinderkopf 13 sowie ein Zylinderblock 14. Mit den Bezugszeichen 15, 16 sind im Zylinderblock eingebrachte Bereiche zur Führung von Öl 15 sowie Wasser 16 angedeutet. Ferner erkennbar ist ein Teilbereich des inneren Metallteiles 2 sowie ein Teilbereich des äußeren Metallteiles 3. Das umlaufende Elastomermaterial 4 bildet einen ersten Dichtbereich, wobei über die Stirnflächen 17, 18 der Metallteile 2, 3 vorstehende Profile 19, 20 angespritzt sind. Bei der Montage der Zylinderkopfdichtung 1, nämlich wenn der Zylinderkopf 13 auf den Zylinderblock 14 aufgesetzt und mittels nicht weiter dargestellter Befestigungselemente verspannt wird, kann das elastomere Material der Profilkörper 19, 20 in entsprechende im Elastomermaterial 4 vorgesehene Freiräume 21, 22 ausweichen. Die Verformung des Elastomermaterials 4 wird somit ausschließlich durch die Metallteile 2, 3 begrenzt.

Die Metallteile 2, 3 können bedarfsweise mit weiteren ausgesparten einander gegenüberliegenden Bereichen 8', 9' versehen sein. Selbige sind mit größerem Abstand zueinander vorgesehen und nehmen separate Metallteile 23 auf, die im Verlauf des Einspritzvorgangs des Elastomermaterials 4 unmittelbar mit dem inneren 2 und dem äußeren Metallteil 3 verbunden werden.

## Patentansprüche

1. Verfahren zur Herstellung einer Zylinderkopfdichtung (1) für eine Verbrennungskraftmaschine, indem aus mindestens einem metallischen Trägermaterial mindestens ein inneres (2) und mindestens ein äußeres Metallteil (3) mit vorgebbarer Kontur herausgetrennt wird, wobei die Konturen so ausgebildet werden, dass bei Ineinanderlegen der Metallteile zwischen selbigen ein Spalt (a) gebildet wird und der Spalt (a) zur Verbindung der Metallteile (2, 3) unter Bildung mindestens eines Dichtbereiches mit Elastomermaterial (4) aufgefüllt wird, sodass die Verbindung der Metallteile (2,3) nur über das Elstomermaterial (4) erfolgt **dadurch gekennzeichnet, dass** das innere Metallteil (2) mit Brennraum-Durchgangsöffnungen (5) versehen wird, im Bereich derer mindestens ein umlaufender Wulst (6) angeprägt wird und dass die Metallteile (2, 3) unter Bildung von einander gegenüberliegenden Ausnehmungen (8, 9) ausgestanzt werden, wobei das Elastomermaterial (4) zur Bildung von Mediendurchgangslöchern (10) auch im Bereich der Ausnehmungen (8, 9) eingebracht wird.

2. Verfahren nach Anspruch 1, **dadurch gekennzeichnet, dass** die Metallteile (2, 3) aus dem gleichen Trägermaterial herausgetrennt werden.

3. Verfahren nach Anspruch 1 oder 2, **dadurch gekennzeichnet, dass** die Metallteile (2, 3) aus dem Trägermaterial ausgestanzt werden.

4. Verfahren nach einem der Ansprüche 1 bis 3, **dadurch gekennzeichnet, dass** das Elastomermaterial (4) in den Spalt (a) eingespritzt wird.

5. Verfahren nach einem der Ansprüche 1 bis 4, **dadurch gekennzeichnet, dass** das Elastomermaterial (4) von beiden Stirnflächen (17, 18) der Metallteile (2, 3) ausgehend gleichzeitig angespritzt wird.

6. Verfahren nach einem der Ansprüche 1 bis 5, **dadurch gekennzeichnet, dass** im Bereich mindestens eines der Metallteile (2, 3) Ausnehmungen (5, 7, 11) erzeugt werden.

7. Verfahren nach einem der Ansprüche 1 bis 6, **dadurch gekennzeichnet, dass** die Ausnehmungen (5, 7, 11) im Verlauf der Formgebung der Metallteile (2, 3) erzeugt werden.

8. Verfahren nach einem der Ansprüche 1 bis 7, **dadurch gekennzeichnet, dass** einzelne oder mehrere der Ausnehmungen (11) nach der Edgemolding-Technik mit weiteren Dichtbereichen (12) versehen werden.

9. Zylinderkopfdichtung (1) für eine Verbrennungskraftmaschine, bestehend aus mindestens zwei in einer Ebene angeordneten, unter Bildung eines Spaltes (a) ineinanderliegenden, vorgebbare Konturen aufweisenden Metallteilen (2, 3), die nur über ein mindestens einen Dichtbereich bildendes Elastomermaterial (4) miteinander verbunden sind hergestellt nach einem der Ansprüche 1 bis 8 **dadurch gekennzeichnet, dass** das innere Metallteil (2) mit Brennraum-Durchgangsöffnungen (5) versehen ist, im Bereich derer mindestens ein umlaufender Wulst (6) angeprägt ist und dass im Bereich des inneren (2) und des äußeren Metallteiles (3) einander gegenüberliegende Ausnehmungen (8, 9) vorgesehen sind, die, durch das Elastomermaterial (4) Mediendurchgangslöcher (10) bildend, miteinander verbunden sind.

10. Zylinderkopfdichtun nach Anspruch 9, **dadurch gekennzeichnet, dass** das Elastomermaterial (4) an vorgebbaren Stellen über mindestens eine Stirnseite (17, 18) der Metallteile (2, 3) Profilkörper (19, 20) bildend, zumindest partiell vorsteht, und dass Freiräume (21, 22) für im Einbauzustand zusammengedrücktes Elastomermaterial (4) der Profilkörper (19, 20) im Bereich des zwischen den Metallteilen (2, 3) ursprünglich gegebenen Spaltes (a) vorgesehen sind.

11. Zylinderkopfdichtung nach einem der Ansprüch 9 bis 10, **dadurch gekennzeichnet, dass** zwischen den Metallteilen (2, 3) ausgesparte Bereiche (8', 9') zur Aufnahme weiterer metallischer Elemente (23) gegeben sind, wobei die Verbindung der Metallteile (2, 3) und der metallischen Elemente (23) über das Elastomermaterial (4) herbeigeführt ist.

12. Zylinderkopfdichtung nach einem der Ansprüche 9 bis 11, **dadurch gekennzeichnet, dass** zumindest im Bereich des innenliegenden Metallteiles (2) weitere durch Elastomermaterial (12) abgedichtete Mediendurchgangslöcher (11) vorgesehen sind.

## Claims

1. Method for producing a cylinder head gasket (1) for an internal combustion engine in that from at least one metal support material, at least one internal (2) and at least one external (3) metal part with predefinable contours are separated out, wherein the contours are configured such that when the metal parts are laid within one another, a gap (a) is formed between said metal parts and the gap (a) is filled with elastomer material (4) to bond the metal parts (2, 3), forming at least one sealing region, so that the bonding of the metal parts (2, 3) takes place only via the elastomer material (4), **characterised in that** the internal metal part (2) is provided with combustion chamber through openings (5) in the region of which at least one peripheral bead (6) is stamped on and that the metal parts (2, 3) are stamped out, forming mutually opposed recesses (8, 9), wherein the elastomer material (4) is also introduced in the region of the recesses (8, 9) for forming media through holes (10).

2. Method according to claim 1, **characterised in that** the metal parts (2, 3) are separated out of the same support material.

3. Method according to claim 1 or 2, **characterised in that** the metal parts (2, 3) are stamped out of the support material.

4. Method according to one of the claims 1 to 3, **characterised in that** the elastomer material (4) is injection moulded into the gap (a).

5. Method according to one of the claims 1 to 4, **characterised in that** the elastomer material (4) is injection moulded on, starting from both end faces (17, 18) of the metal parts (2, 3) simultaneously.

6. Method according to one of the claims 1 to 5, **characterised in that** recesses (5, 7, 11) are formed in the region of at least one of the metal parts (2, 3).

7. Method according to one of the claims 1 to 6, **characterised in that** the recesses (5, 7, 11) are produced during the forming of the metal parts (2, 3).

8. Method according to one of the claims 1 to 7, **characterised in that** individual or a plurality of the recesses (11) are provided with further sealing regions (12) by means of the edge moulding technique.

9. Cylinder head gasket (1) for an internal combustion engine, comprising at least two metal parts (2, 3) arranged within one another in one plane, forming a gap (a), said metal parts having predefinable contours and being bonded to one another only via an elastomer material (4) forming at least one sealing region, produced according to one of the claims 1 to 8, **characterised in that** the internal metal part (2) is provided with combustion chamber through openings (5), in the region of which at least one peripheral bead (6) is stamped on and that in the region of the internal metal part (2) and the external metal part (3), mutually opposed recesses (8, 9) are provided which are bonded to one another by means of the elastomer material (4), forming media through holes (10).

10. Cylinder head gasket according to claim 9, **characterised in that** the elastomer material (4) projects at least partially at predefinable sites, forming profile bodies (19, 20), beyond at least one end side (17, 18) of the metal parts (2, 3), and that free spaces (21, 22) are provided for elastomer material (4) which, in the installed condition, is compressed in the region of the initially existing gap (a) between the metal parts (2, 3).

11. Cylinder head gasket according to one of the claims 9 to 10, **characterised in that** cut-out regions (8', 9') for accommodating further metallic elements (23) are provided between the metal parts (2, 3), wherein the bonding of the metal parts (2, 3) and the metallic elements (23) is brought about via the elastomer material (4).

12. Cylinder head gasket according to one of the claims 9 to 11, **characterised in that** at least in the region of the internal metal part (2), further media through holes (11) sealed by means of elastomer material (12) are provided.

## Revendications

1. Procédé de fabrication d'une garniture d'étanchement (1) destinée à la culasse cylindrique d'un moteur à combustion interne, au moins une partie métallique intérieure (2) et au moins une partie métallique extérieure (3), dont le profil peut être préétabli, étant débitées à partir d'au moins un matériau substrat métallique, sachant que les profils sont conçus de façon telle qu'un interstice (a) soit formé entre les parties métalliques lorsque ces dernières sont imbriquées l'une dans l'autre, ledit interstice (a) étant comblé d'un matériau élastomère (4) en vue de solidariser les parties métalliques (2, 3), en formant au moins une zone d'étanchement, de sorte que la solidarisation desdites parties métalliques (2, 3) est assurée uniquement par ledit matériau élastomère (4), **caractérisé par le fait que** la partie métallique intérieure (2) est munie d'orifices de passage (5) qui sont destinés à une chambre de combustion, et dans la région desquels au moins un bourrelet périphérique (6) est empreint ; et **par le fait que** les parties métalliques (2, 3) sont poinçonnées en formant des évidements (8, 9) situés en vis-à-vis mutuel, le matériau élastomère (4) étant également déversé dans la région desdits évidements (8, 9), afin de former des trous (10) de passage de fluides.

2. Procédé selon la revendication 1, **caractérisé par le fait que** les parties métalliques (2, 3) sont débitées à partir du même matériau substrat.

3. Procédé selon la revendication 1 ou 2, **caractérisé par le fait que** les parties métalliques (2, 3) sont poinçonnées à partir du matériau substrat.

4. Procédé selon l'une des revendications 1 à 3, **caractérisé par le fait que** le matériau élastomère (4) est injecté dans l'interstice (a).

5. Procédé selon l'une des revendications 1 à 4, **caractérisé par le fait que** le matériau élastomère (4) est simultanément rapporté par injection, à partir des deux faces extrêmes (17, 18) des parties métalliques (2, 3).

6. Procédé selon l'une des revendications 1 à 5, **caractérisé par le fait que** des évidements (5, 7, 11) sont pratiqués dans la région d'au moins l'une des parties métalliques (2, 3).

7. Procédé selon l'une des revendications 1 à 6, **caractérisé par le fait que** les évidements (5, 7, 11) sont façonnés au cours de la mise en forme des parties métalliques (2, 3).

8. Procédé selon l'une des revendications 1 à 7, **caractérisé par le fait que** des évidements individuels, ou plusieurs desdits évidements (11), sont munis de zones supplémentaires d'étanchement (12) en appliquant la technique "edge-molding".

9. Garniture d'étanchement (1) destinée à la culasse cylindrique d'un moteur à combustion interne, constituée d'au moins deux parties métalliques (2, 3) dotées de profils pouvant être préétablis, disposées dans un plan, imbriquées l'une dans l'autre en réservant un interstice (a), et reliées l'une à l'autre uniquement par l'intermédiaire d'un matériau élastomère (4) formant au moins une zone d'étanchement, ladite garniture étant fabriquée conformément à l'une des revendications 1 à 8, et étant **caractérisée par le fait que** la partie métallique intérieure (2) est munie d'orifices de passage (5) qui sont destinés à une chambre de combustion, et dans la région desquels au moins un bourrelet périphérique (6) est empreint ; et par la présence, dans la région des parties métalliques intérieure (2) et extérieure (3), d'évidements (8, 9) qui se font mutuellement face et sont reliés l'un à l'autre avec formation, par le matériau élastomère (4), de trous (11) de passage de fluides.

10. Garniture d'étanchement pour culasse cylindrique, selon la revendication 9, **caractérisée par le fait que** le matériau élastomère (4) fait au moins partiellement saillie au-delà d'au moins une face extrême (17, 18) des parties métalliques (2, 3), dans des zones pouvant être préétablies, en formant des corps profilés (19, 20) ; et **par le fait que** des espaces libres (21, 22), destinés à du matériau élastomère (4) des corps profilés (19, 20) comprimé à l'état intégré, sont prévus dans la région de l'interstice (a) initialement réservé entre lesdites parties métalliques (2, 3).

11. Garniture d'étanchement pour culasse cylindrique, selon l'une des revendications 9 à 10, **caractérisée par le fait que** des zones évidées (8', 9') sont façonnées entre les parties métalliques (2, 3), en vue de recevoir des éléments métalliques supplémentaires (23), la solidarisation desdites parties métalliques (2, 3) et desdits éléments métalliques (23) étant assurée par le matériau élastomère (4).

12. Garniture d'étanchement pour culasse cylindrique, selon l'une des revendications 9 à 11, **caractérisée par** la présence, au moins dans la région de la partie métallique intérieure (2), de trous supplémentaires (11) de passage de fluides dont l'étanchéité est assurée par un matériau élastomère (12).
